# EUROPEAN PATENT APPLICATION

(11) **EP 2 595 108 A1**
(43) Date of publication of application: **22.05.2013**
(21) Application number: 11806558.0
(22) Date of filing: 19.05.2011
(51) Int. Cl.: G06Q 30/00, G06K 7/00, G06K 17/00, G06Q 10/00, G06Q 50/00, G07G 1/12

(54) **SYSTEM FOR ENCOURAGING CUSTOMERS TO VISIT SHOP**

(30) Priority: 13.07.2010 JP 2010158770
(71) Applicant: Tanaka, Shinichi, Kanagawa 230-0014 (JP)
(72) Inventor: Tanaka, Shinichi, Kanagawa 230-0014 (JP)
(74) Representative: Nunnenkamp, Jörg
(86) International application number: PCT/JP2011/062033
(87) International publication number: WO 2012/008227

(57) **Abstract**

A customer's coming-to-a-store acceleration system for presenting strong incentive to the customers for their coming to the store, and for accelerating customer's coming to the store and enabling to collect information on customer's coming to the store is provided. This customer's coming-to-a-store acceleration system comprises: a coming-to-a-store notice means for inputting coming-to-a-store notice information, a customer identification means for identifying a customer, a means for specifying the coming-to-a-store notice information of said customer, a collation means for collating coincidence or discrepancy between either the date or time of the customer's coming-to-a-store notice information or duration until the customer's coming-to-a-store or purchasing is made and either the date or time on/at which said customer's coming-to-a-store or purchasing was verified or duration until said verification was made, and an incentive presentation means for presenting an incentive to the customer on condition that it is verified by the collation means that either the date or time of the coming-to-a-store or the duration until the coming-to-a-store or purchasing was made is consistent with either the date or time on/at which said customer's coming -to-a-store or purchasing was verified or the duration until said verification was made.

## Description

### FIELD OF THE INVENTION

The present invention relates to a system for accelerating customer's coming to a store, and more particularly to a system with which an incentive is presented to a customer by the store in reward for an event that a customer had fulfilled a given requirement so that said customer is encouraged to come to said store.

### PRIOR ART

Conventionally, as a tool for motivating customers to come to a store, a service point card to be owned by the customer, in which points for obtaining a special favor from the store can be added, and a service stamp card, on which a certain number of service stamps are pressed by the store in reward for the amount of goods or service purchased by a customer, the both are to be given from the store to the customer, has been utilized.

However, although these tools can be an incentive for encouraging customers to come to a store to some extent, such tools are not a strong incentive for the customers for repeatedly coming to a store, since the customers in general can be provided with an even numbers of service points. Further, the stores could not have obtained information from such tools, as to if customers come to their stores again or not, and when do customers come to their stores next time.

For example, the invention according to Patent Document 1 cited below relates to a system for giving discount to goods in connection with a record of a specific customer's coming to a store in the past. And, the invention according to Patent Document 2 specified below relates to a method for sales management of goods by which, when a customer showed an intention to purchase a good, the availability of the good in future is secured, thereby establishing the formation of the sales of the good with which a trade contract can be concluded by means of enabling reduction of the selling price and providing gift certificates or service points having an equivalent value thereto. The invention according to Patent Document 3 specified below relates to a system for selecting a service to be provided on the basis of information on goods purchased by customers and the customer attribute information. The invention according to Patent Document 4 relates to a system for managing presentation of incentive, which provides greater incentive to a customer who had purchased more goods during a prefixed period.
[Patent Document 1]: Japanese Unexamined Patent Application Publication No. 2000-30153
[Patent Document 2]: Japanese Unexamined Patent Application Publication No. 2007-164743
[Patent Document 3]: Japanese Unexamined Patent Application Publication No. 2007-109168
[Patent Document 4]: Japanese Unexamined Patent Application Publication No. 2004-220426

### SUMMARY OF INVENTION

Therefore, it is an object of the present invention to provide a system, which can strongly motivate customers to come to a store for the next time afterward, and which not only can accelerate customer's coming to a store but also can make possible to obtain predicted information on customer's coming to a store for the next time afterward.

The customer's coming-to-a-store acceleration system according to the present invention for achieving the above-described object comprises:
a coming-to-a-store notice means for inputting coming-to-a-store notice formation including at least either one of the date or time of an expected customer's coming to a store or purchasing for the next time afterward or duration until the coming to a store or purchasing will be made,
a means for specifying said customer's coming-to-a-store notice information,
a collation means for collating coincidence or discrepancy between either the date or time of customer's coming-to-a-store notice information or duration until the customer's coming to a store or purchasing is made and either the date or time on/at which said customer's coming-to-a-store or purchasing was verified or duration until said verification was made, and
an incentive presentation means for presenting an incentive to a customer on condition that it is verified by the collation means that either the date or time of the coming-to-a-store notice information or duration until the coming-to-a-store or purchasing was made is consistent with either the date or time on/at which said customer's coming-to-a-store or purchasing was verified or duration until said verification was made,
characterized in that an incentive is given to said customer when said customer came to the store on the same day as the date of the customer's coming-to-a-store notice information.

The customer's coming-to-a-store acceleration system according to the present invention comprises:
a coming-to-a-store notice means for inputting coming-to-a-store notice information including at least either one of the date or time of an expected customer's coming to a store or purchasing for the next time afterward or duration until customer's coming to a store or purchasing will be made,
a customer identifier input means for inputting customer identifiers,
a transmission means for transmitting the inputted information between itself and a database,
a storage means for storing the coming-to-a-store notice information in connection with the customer identifiers,
an extracting means for extracting the coming-to-a-store notice information corresponding to the customer identifier,
a collation means for collating coincidence and discrepancy between either the date or time of the extracted coming-to-a-store notice information or duration until the coming to a store or purchasing was made and either the date or time on/at which the customer identifier was inputted by the customer identifier input means or duration until said inputting was verified, and
an incentive presentation means for presenting an incentive to said customer on condition that it is verified by the collation means that either the date or time of the coming-to-a-store notice information or duration until the coming to a store or purchasing was made is consistent with either the date or time on/at which the customer identifier was inputted by the customer identifier input means or duration until said inputting was made,
characterized in that an incentive is presented to said customer when said customer came to a store on the same day as the date of the customer's coming-to-a-store notice information.

The customer's coming-to-a-store acceleration system according to the present invention comprises:
a coming-to-a-store notice means for inputting coming-to-a-store notice information including at least either one of expected date or time of customer's coming to a store or purchasing for the next time afterward or duration until customer's coming to a store or purchasing is made,
a storage device recognition means for recognizing a customer's storage device,
a storage means for storing the coming-to-a-store notice information to the storage device,
a reading unit for reading the coming-to-a-store notice information stored in the customer's storage device,
a collation means for collating coincidence or discrepancy between either the date or time of the coming-to-a-store notice information read by the reading means or duration until the coming to a store or purchasing is made and either the date or time on/at which the coming-to-a-store notice information was read by the reading means or duration until the said reading was made, and
an incentive presentation means for presenting an incentive to the customer on condition that it is verified by the collation means that either the date or time of the coming-to-a-store notice information or duration until the customer's coming to a store or purchasing is made is consistent with either the date or time on/at which the coming-to-a-store notice information was read or the duration until said reading was made,
and is characterized in that an incentive is presented to the customer when said customer came to a store on the same day as the date of the customer's coming to a store.

The customer's coming-to-a-store accelerating system according to the present invention is characterized by including a penalty imposing means for imposing penalty on such conditions that the collated result obtained by the collation means is inconsistent and that the date, time or duration at which the collated result by the collation means was operated has passed the date or time of the coming-to-a-store notice information or duration until the coming to a store or purchasing is made.

The incentive presentation means described above is characterized by including a point addition means for adding incentive points to the customer's point table on condition that the collated result performed by the collation means is consistent.

The incentive presentation means described above is characterized by including a point additional rate variation means for varying the additional rate to the incentive point.

The penalty imposing means described above is characterized by including a point reduction means for reducing the incentive points from the customer's point table on such conditions that the collated result performed by the collation means is inconsistent and/or that the date, time or duration on/at/during which the collated result by the collation means was operated has passed either the date or time of the customer's coming to a store or duration until the customer's coming to a store or purchasing is made.

The penalty imposing means described above is characterized by including a point subtractive rate variation means for varying the subtractive rate from the incentive point.

The incentive presentation means is further characterized by including a means for giving discount to the price of a good or service to be purchased by a customer on condition that the collated result performed by the collation means is consistent.

The incentive presentation means is yet characterized by including a display means for displaying the details of the incentives to be presented to customers on an apparatus installed in the store on condition that the collated result performed by the collation means is consistent.

The coming-to-a-store notice means described above is characterized in that it is an input apparatus for selection and input of a date or time for customer's coming to a store for the next time afterward or duration until the customer's next coming to a store is made to be performed by the customer.

Said collation means is characterized in that it is a means for carrying out mathematical operation based on the measured result by means of a clocking device to collate coincidence and discrepancy between either the date or time specified in the coming-to-a-store notice information or duration until the customer's coming to a store or purchasing is made and the date, time or duration on/at/during which said collation means carries out the mathematical operation.

The customer identifier input means described above is characterized in that it is an input device for inputting identification numbers, bar codes, two-dimensional bar codes, magnetic data and electronic data or a reading device for reading identification numbers, bar codes, two-dimensional bar codes, magnetic data and electronic data.

The storage means described above is characterized in that it is a means for writing data to a magnetic card, an IC tag or a communication terminal, each of those which have been owned by a customer.

### ADVANTAGEOUS EFFECT OF THE INVENTION

The customer's coming-to-a-store acceleration system according to the present invention comprises:
a coming-to-a-store notice means for inputting coming-to-a-store notice information including at least either one of expected date or time of customer's coming to a store or purchasing for the next time afterward and duration until customer's coming to a store or purchasing is made,
a means for specifying the customer's coming-to-a-store notice information,
a collation means for collating coincidence and discrepancy between either the date or time of customer's coming to a store or duration until customer's coming to a store or purchasing is made and either the date or time on/at which the customer's coming to a store or purchasing was verified or duration until said verification was made, and
an incentive presentation means for presenting an incentive to the customer on condition that it is verified by the collation means that either the date or time of the coming-to-a-store notice information or duration until the customer's coming to a store or purchasing is made is consistent with either the date or time on/at which the customer's coming to a store or purchasing was verified or duration until said verification was made,
wherein, when the customer came to a store on the same day as the date specified in the customer's coming-to-a-store notice information, an incentive is presented to the customer so that the customer can gain more incentive if the customer comes to a store or purchases goods on the day noticed of coming to the store and is strongly motivated to come to the store. On the other hand, the store can encourage the customer's coming to the store to thereby increase customers and obtain estimated information on customer's coming to a store for the next time afterward, which is useful for set-up of bargain days and the inventory management.

The customer's coming-to-a-store acceleration system according to the present invention comprises:
a coming-to-a-store notice means for inputting coming-to-a-store notice information including at least either one of an expected date or time of customer's coming to a store or purchasing for the next time afterward or duration until customer's coming to a store or purchasing is made,
a customer identifier input means for inputting customer identifiers,
a transmission means for transmitting the inputted information between itself and the database,
a storage means for storing the coming-to-a-store notice information therein in correlation with the customer identifiers,
an extraction means for extracting the coming-to-a-store notice information corresponding to the customer identifier, respectively,
a collation means for collating coincidence and discrepancy between either the date or time of the extracted coming-to-a-store notice information or duration until the customer's coming to a store or purchasing is made and either the date or time on/at which the customer identifier was inputted by the customer identifier input means or the duration until the input of the customer identifier is verified, and
an incentive presentation means for presenting an incentive to the customer on condition that it is verified by the collation means that either the date or time of the coming-to-a-store notice information or duration until the customer's coming to a store or purchasing is made is consistent with either the date or time on/at which the customer identifier was inputted by the customer identifier input means or the duration until the input of the identifier was made,
wherein an incentive is presented to a customer when said customer came to a store on the same day as the date specified in the coming-to-a-store notice information to thereby establish a system with the customer identifiers and the database so that the customer can participate the system by just holding its unique identifier and the store can manage the various information in a consolidated manner.

The customer's coming-to-a-store acceleration system according to the present invention comprises:
a coming-to-a-store notice means for inputting coming-to-a-sore notice information including at least either one of an expected date or time of customer's coming to a store or purchasing for the next time afterward or duration until the customer's coming to a store or purchasing is made,
a storage device recognition means for recognizing the customer's storage device,
a storage means for storing the coming-to-a-store notice information to the storage device,
a reading means for reading the coming-to-a-store notice information stored in the storage device,
a collation means for collating coincidence and discrepancy between either the date or time of the coming-to-a-store notice information read by the reading means or duration until the customer's coming to a store or purchasing is made and either the date or time on/at which the coming-to-a-store notice information was read by the reading means or duration until said reading was made, and
an incentive presentation means for presenting an incentive to the customer on condition that it is verified by the collation means that either the date and time of the coming-to-a-store notice information or duration until the customer's coming to a store or purchasing is made is consistent with either the date or time on/at which the coming-to-a-store notice information was read or duration until the said reading was made,
wherein an incentive is presented to the customer when the customer came to a store on the same day as the date specified in the coming-to-a-store notice information to thereby store the information to the customer's storage device so that the store can operate the system without establishing a system, such as a network and a server.

In addition, in the above-described customer's coming-to-a-store acceleration system according to the present invention, a penalty imposing means may be provided to the system, which imposes penalty to the customer on condition that the collated result performed by the collation means is inconsistent and/or the date, time or duration when the collated result is operated by the collation means has passed the date or time specified in the coming-to-a-store notice information or duration until the coming to a store or purchasing is made, to thereby let the customers avoid from being imposed with penalty and to further encourage them to come to a store.

### BRIEF DESCRIPTION OF THE DRAWINGS

[FIG. 1] A schematic view showing the system according to the first embodiment of the present invention,
[FIG. 2] A schematic view showing the system according to the second embodiment of the present invention,
[FIG. 3] A schematic view showing the system according to the third embodiment of the present invention,
[FIG. 4] A flow chart showing the system according to the present invention,
[FIG. 5] A flow chart showing the system according to the present invention,
[FIG. 6] A flow chart showing the system according to the present invention, and
[FIG. 7] A flow chart showing the system according to the present invention.

### Description of the reference numerals

1: Customer's coming-to-a-store accelerating system
12: Customer's coming-to-a-store accelerating system
13: Customer's coming-to-a-store accelerating system
2: Apparatus-in-store
21: Monitor
22: Coming-to-a-store notice information input device
23: Identifier input device
24: Communication device
25: Customer terminal
3: Server
31: Database
41: CPU
42: RAM
51: Card
52: Card
53: Card
6: Apparatus-in-store
61: Monitor
62: Coming-to-a-store notice information input device
63: Reader/writer device
64: CPU
7: Storage device (Magnetic card)
8: Storage device (Card with a built-in RFID tag)
9: Storage device (Portable communication terminal)

### DETAILED DESCRIPTION OF THE PREFERRED EMBODIMENTS

The customer's coming-to-a-store acceleration most according to the present invention, which is the most simple and general system, comprises:
a coming-to-a-store notice means for inputting coming-to-a-store notice information including at least either one of an expected date or time of customer's coming to a store for the next time afterward or duration until customer's coming to a store or purchasing is made,
a customer identification means for identifying a customer,
a means for specifying the customer's coming-to-a-store notice information,
a collation means for collating coincidence or discrepancy between the date of the coming-to-a-store notice information and the date on which the customer's coming to a store was verified, and
an incentive presentation means for presenting an incentive to the customer on condition that it is verified by the collation means that either the date or time of the coming-to-a-store notice information or duration until the customer's coming to a store or purchasing is consistent with the date on which the fact of coming to the store was inputted or duration until said input was made.

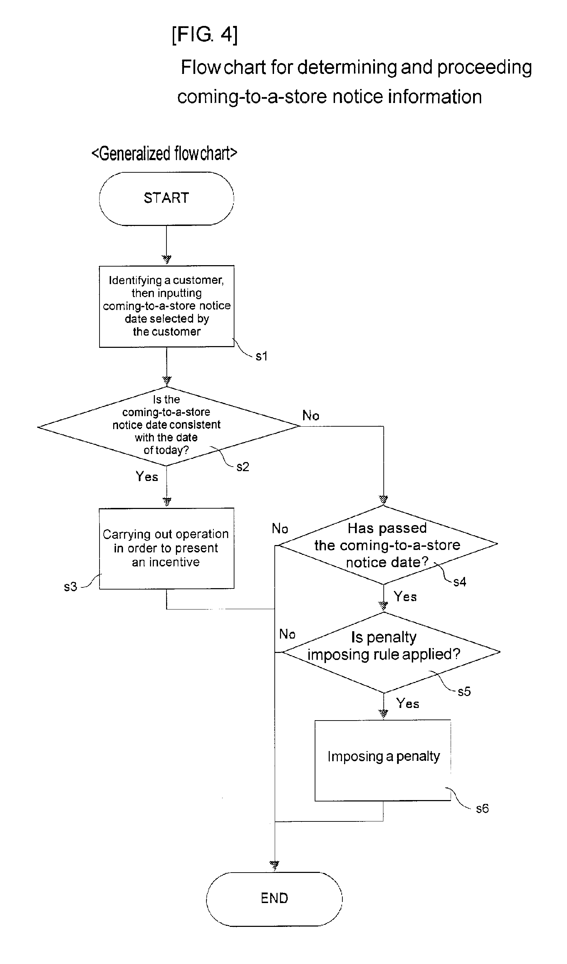

The generalized process of the above-described system is shown in FIG. 4 in the form of a flow chart. A customer came to a store and inputs the customer identifier number and the expected date of the customer's coming to a store, e.g. July 1, 2010, which is previously noticed by own via the numerical keypad or the like (S1). The collation means collates whether the noticed date of the customer's coming to a store (e.g. July 1, 2010) having been inputted is consistent with the date on which the input is actually made (e.g. today) (S2). Then, the incentive presentation means operates to present an incentive on condition that a result of "Coincidence (Yes)" is figured out (S3). Up to this process, it is noted as the fundamental operation. Besides, it is collated by the collation means whether the actual input date has passed the date of coming to a store or not on condition that the result of "discrepancy (No)" is figured out (S4). When the actual coming date has not passed the previously noticed date (No), the operation shall be terminated. However, when the actual coming date has passed the coming-to-a-store notice date (Yes), it is collated whether the penalty imposing means is set to be operated (S5). Then, the operation shall be terminated when the penalty imposing means is not set (No), whereas the penalty operation is effectuated when the penalty imposing means is set to be operable (Yes) (S6).

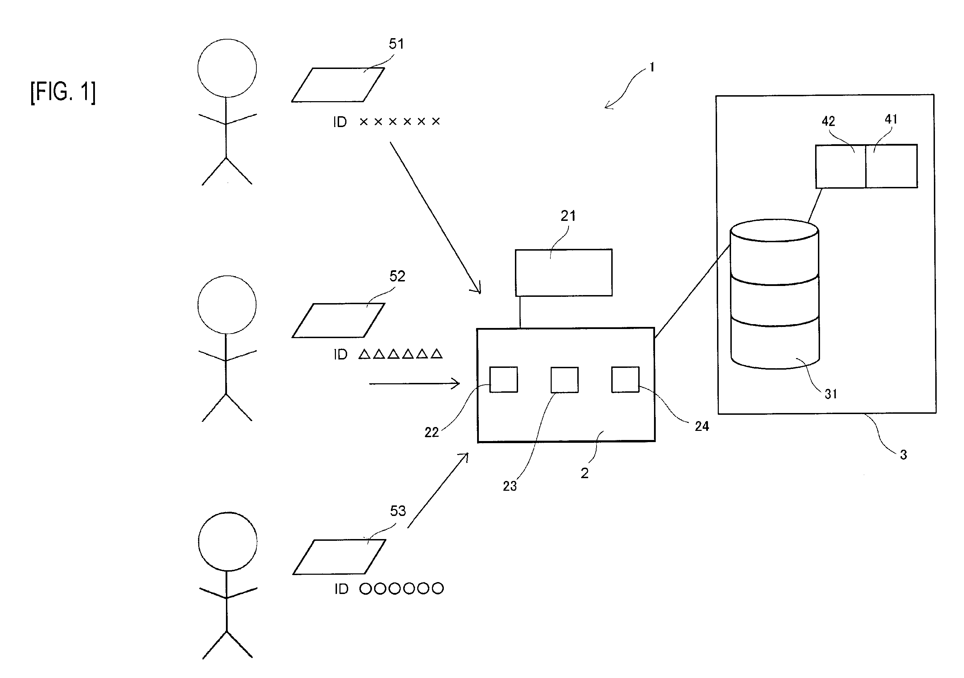

FIG. 1 shows the customer's coming-to-a-store acceleration system according to the first embodiment of the present invention. The system of FIG. 1 is constituted with:
an apparatus-in-store 2 to be installed at a store,
a server 3 equipped with and/or connected to a CPU 41, a RAM 42, a database 31, etc. and placed at a store or the head office, and
a customer ID to be written and stored in a card 51 ∼ 53 (5X) to be owned by the customer,
wherein the apparatus-in-store 2 and the server 3 are connected in the manner capable of communicating to each other via a communication network, such as cables, dedicated lines, and the Internet. This system 1 is an example of a system, in which coming-to-a-store notice information is inputted by a customer via the apparatus-in-store 2 installed in a store, and a customer identifier is inputted via the apparatus-in-store 2 on the actual coming date for verification of coming to a store, and these information are processed by the server 3.

The identifier number is previously stored in the form of magnetic data in the customer-owned card 51 ∼ 53, and a customer ID, e.g. a unique number consisting of 16 digits, is provided to each customer-owned card.

To the apparatus-in-store 2, are connected a coming-to-a-store notice information input device 22, such as a numerical keypad type or a touch panel type of input devices, functioning as a coming-to-a-store notice means for inputting an expected date of the next coming to a store, a reading device for reading a customer ID from a magnetic card or an identifier input device 23 like a numerical keypad device, functioning as a customer identifier input means, and a communication device 24 such as a modem for transmitting information with the server 3. Further, the apparatus-in-store 2 is also connected with a monitor 21. In the system 1, the aforementioned devices are integrated in an apparatus-in-store 2, and the numerical keypad, the reading device and the touch panel type of input device are configured so that they can work as an input means as well. Note that these devices may be structured as a separate device. The monitor 21 connected to the apparatus-in-store 2 is configured so that not only a calendar for selecting the date of customer's coming-to-a-store notice but also bargain day information, advertisement information and the like can be outputted thereon. Besides, such information may be transmitted from the database 31 in the server 3. Note that the apparatus-in-store 2 may be equipped with a POS and/or a register (not shown) to make possible to input various information to the apparatus-in-store 2 at the time of purchasing of goods and/or services. Furthermore, a printing device for printing the date of coming-to-a-store notice onto the surface of a card 51 ∼ 53 may also be provided.

In the system 1, the identifier input device 23 in the apparatus-in-store 2 is adapted to read, upon insertion of the card 51 ∼ 53 into the device 23, the customer ID consisting of magnetic data being applied to a card 51 ∼ 53. The coming-to-a-store notice information input device 22 is configured such that an arbitrary date of coming-to-a-store notice can be selected from a calendar of the day afterward displayed on the monitor 21 to input the selected date. The communication device 24 is configured such that it can transmit the customer ID and the inputted date of the coming-to-a-store notice to the server 3. Note that the reading of the customer ID by means of these devices and the operation to input the coming-to-a-store notice and information on coming to a store may be carried out by either the customer itself or the clerks of the store.

The server 3 is an arithmetic unit to which a database 31, a CPU 41, a RAM 42, etc. are mounted or connected in the manner capable of mutually communicating, and is in condition where it transmits information reciprocally with the apparatus-in-store 2. In the database 31, at least a date table and a customer's point table are stored. The CPU 41 is configured such that it stands a flag corresponding to a customer ID at a position of the date table which comes under the coming-to-a-store notice information, when the coming-to-a-store notice information and the customer ID are transmitted from the apparatus-in-store 2. Further, the CPU 41 has a means for utilizing the customer ID as the clue to extract the date specified in the corresponding coming-to-a-store notice information when the customer ID is transmitted from the apparatus-in-store 2. The CPU 41 is also provided with a collation means for collate by carrying out mathematic operation whether the extracted date of the coming-to-a-store notice information is consistent with the date on which the fact of coming to a store was verified (the date on which the customer ID was transmitted) or not. This collation means is connected to a calendar device or a clocking device for checking the date on which the customer ID was transmitted from the apparatus-in-store 2. Besides, the calendar device or the clocking device may be mounted to the apparatus-in-store 2 but not to the server 3. In such a case, the date simultaneously checked with the customer ID is transmitted to the server 3.

Note that, in the system 1, the point presentation means is configured to add incentive points, which can be utilized for purchasing goods or services, and the CPU 41 has a point addition means for adding a given number of incentive points to the point table corresponding to the customer ID on condition that such a result that the date of the coming-to-a-store notice information is consistent with the date on which the customer ID was transmitted (for example, today) was verified by the collation means. The CPU 41, in addition to or substituting the point addition means, further includes a point additional rate variation means for varying the point additional rate, which is multiplied to the incentive points in the point table corresponding to the customer ID, to the greater rate on condition that such a result that the date of the coming-to-a-store notice information is consistent with the date on which the customer ID was transmitted was verified by the collation means. This point additional rate variation means can vary the rate for every point tables of the customers who came to the store many times exceeding the prefixed times, or on the days of more customers coming to the store or less customers coming to the store, or over a given period, such as a period of prefixed bargain days.

Further, in the system 1 to which the penalty imposing means can be applied, the penalty imposing means is configured such that the incentive point that is utilized for purchasing goods or services can be reduced. The CPU 4 includes a point reduction means for reducing a given number of incentive points from the point table corresponding to the customer ID on such conditions that it was verified by the collation means that the date of the coming-to-a-store notice information and the date on which the customer ID was transmitted (e.g. today) are inconsistent, and that the date of the coming-to-a-store notice information has passed the date on which the customer ID was transmitted. In addition to or substituting the point reduction means, the CPU 4 also includes a point additional rate variation means for varying the point additional rate, which is multiplied to the incentive points in the point table corresponding to the customer ID, to a lower rate on condition that it is verified by the collation means that the date of the coming-to-a-store notice information is inconsistent with the date verified by the coming-to-a-store fact verification means, and that the date on which the customer ID was transmitted (e.g. today) has passed the date of the coming-to-a-store notice information. Note that the setting-up of the penalty imposing means to be applied or not to be applied can be selected arbitrarily.

Note that, in the other system 1 where discount to the price of goods and services to be purchased by the customer has been applied, the CPU 4 is adapted to transmit the discount amounts to be applied to the price table (e.g. minus 100 yen) to the apparatus-in-store 2, the POS (not shown) and the register to thereby reflect such reduction to the purchased on condition that such a result that the date of the coming-to-a-store notice information is consistent with the date on which the customer ID was transmitted (e.g. today) was verified by the collation means. In this manner, a good with a unit price of 300 yen, for example, shall be sold to the customer at a price with 100 yen reduction, i.e. 200 yen.

Note that, in the other system where the point presentation means displays the incentive goods to the customers on a monitor for the store clerk use, the CPU 4 is adapted to transmit the type of incentive goods to be presented from the database to the apparatus-in-store 2, the POS (not shown) or the register to display them on the monitor on condition that such a result that the date of the coming-to-a-store notice information is consistent with the date on which the customer ID was transmitted (e.g. today) was verified by the collation means. Accordingly, an incentive good, e.g. a gift or the like, is given to the customer.

The card 51 ∼ 53 used for system 1 is a magnetic card from which magnetic data is read. However, the card may be a card to which an identification number, a bar code, a two-dimensional bar code and an electronic data are inputted and stored to form a customer ID, and the identifier input device 23 may be an input device corresponding to the customer ID.

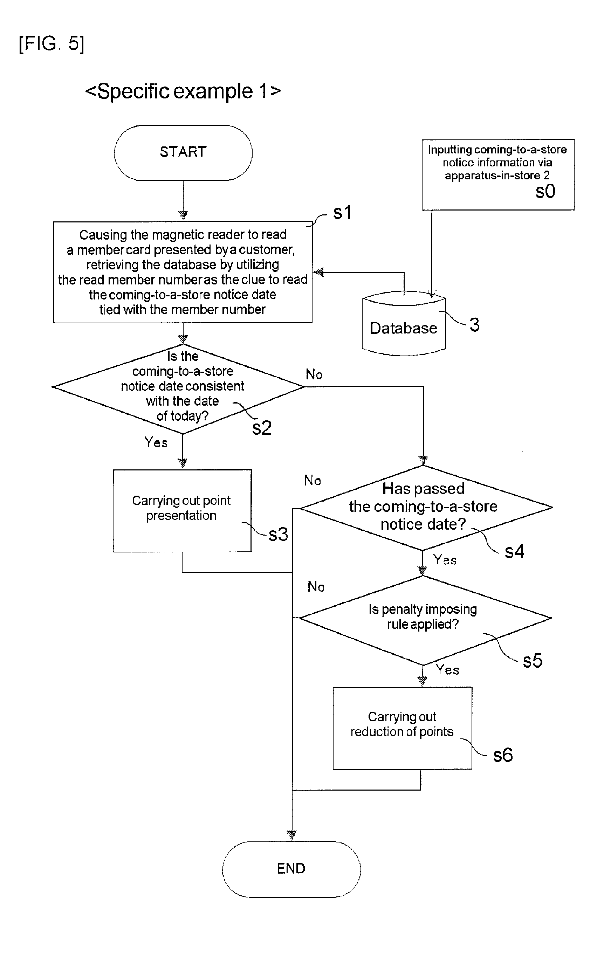

FIG. 5 shows a flow chart explaining the operational process in the system 1. When the customer came to a store and inserts the card 51 into the identifier input device 23, the identifier input device 23 read the customer ID. For example, a coming-to-a-store notice date for the next time afterward (e.g. July 1, 2010) is inputted with referring to the calendar displayed on the monitor 21 via the coming-to-a-store notice information input device 22, the inputted customer ID and the coming-to-a-store notice information are then transmitted to the server 3 via the communication device 24, and the CPU 24 stands a flag which corresponds the customer ID on the date table of the data base 31 (S0). Up to this operation, it is noted as the coming-to-a-store notice stage.

When said customer came to the store and then inserts the card 51 into the identifier input device 23, the customer ID of said customer is read by the identifier input device 23. Then, this customer ID is transmitted to the server 3. In the server 3, the CPU 41 receives the customer ID, it then utilizes the customer ID as the clue and refers to the flag being stood on the date table of the database 31 to extract the coming-to-a-store notice date (e.g. July 1, 2010) which corresponds to the customer ID (S1).

Then, in the server 3, the CPU 41 verifies the date on which the custom ID was transmitted to the server 3 (e.g. today), and carries out mathematical operation to clarify whether the coming-to-a-store notice date of said customer (e.g. July 1, 2010) is consistent with the date on which the customer ID was transmitted to the server 3 (e.g. today) or not by means of the collation means (S2). Up to this process, it is noted as the collation stage.

When the result of the mathematical operation by means of the collation means is consistent (today corresponds to July 1, 2010: Yes), the CPU 41 utilizes the customer ID as the clue to add a preset number of points (e.g. 1 point) to the point table of said customer stored in the database 31 by means of the point addition means (S3). Up to this process, it is noted as the incentive presentation stage.

Besides, when the result of the mathematical operation by means of the collation means is inconsistent (No), the CPU 41 verifies whether the date on which the customer ID was transmitted to the server 3 (e.g. today) has passed the coming-to-a-store notice date (e.g. July 1, 2010) or not (S4). In case that the date on which the customer ID was transmitted to the server 3 has not passed the coming-to-a-store notice date (No), the operation shall be terminated.

In case that the date on which the customer ID was transmitted to the server 3 has passed the coming-to-a-store notice date (Yes), the CPU 41 determines whether the penalty imposing means is set to be operated or not (S5). In case no penalty imposing means is applied and there is no rule of imposing penalty (No), the operation shall be terminated.

In case that the rule of imposing penalty is applied to the system (Yes), the CPU 41 utilizes the customer ID as the clue to reduce a prefixed number of points (e.g. 1 point) from the point table of the customer stored in the database 31 by means of the point reduction means (S6). Up to this process, it is noted as the penalty imposing stage. The stages as described above constitute the flow of the system which verifies the fact of coming to the store based on the coming-to-a-store notice, and then collates the date of the coming-to-a-store notice date and the date on which the fact of coming to a store was verified are consistent to thereby either present an incentive or impose penalty according to said collated result.

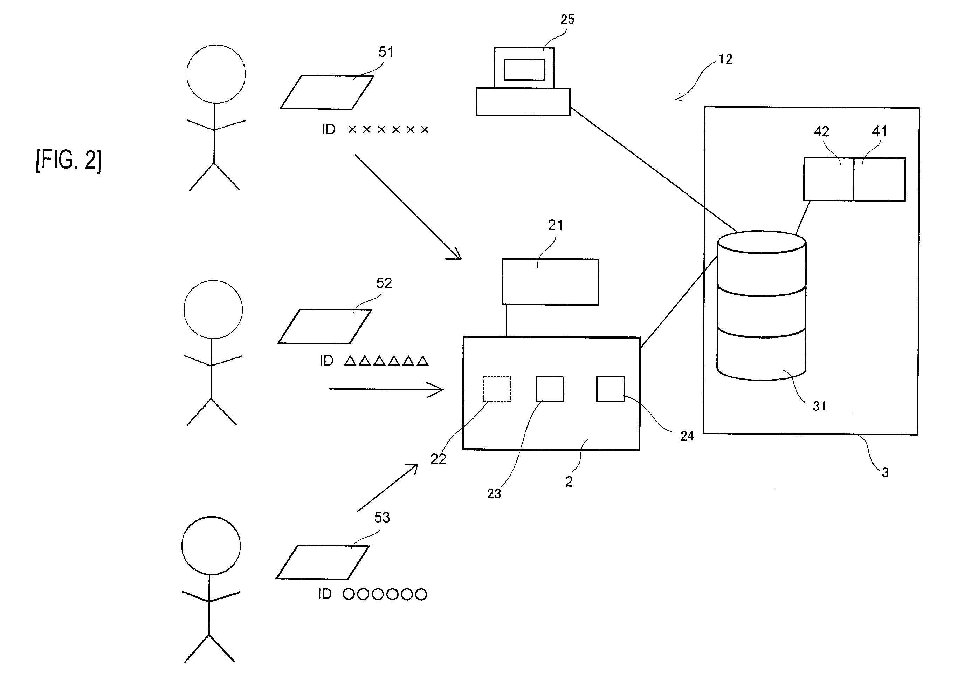

FIG. 2 shows the customer's coming-to-a-store acceleration system according to the second embodiment of the present invention. The customer's coming-to-a-store acceleration system 12 shown in FIG. 2 comprises:
an apparatus-in-store 2 including a monitor 21 to be set in the store,
a server 3 either mounted with or connected to a CPU 41, a RAM 42, a database 31, etc. and installed in either in a store or the head office,
a customer ID written to and stored in a card 51 ∼ 53 (5X) to be owned by a customer, and
a customer terminal 25 as a coming-to-a-store notice device to be operated outside the store by the customer,
and is characterized in that the apparatus-in-store 2, the customer terminal 25 and the server 3 are connected to one another with cables, a dedicated line or a communication network such as the Internet in the manner capable of transmitting information. This system 12 is an example of the system wherein coming-to-a-store information is inputted on the customer terminal 25 owned by the customer, a customer identifier is inputted on the apparatus-in-store 2 when the customer came to the store for purpose of proving the fact of the coming to the store, and these information are processed by the server 3.

The customer has been provided with a customer ID in advance, and the customer ID has been written to and stored in a card 51 ∼ 53 in the form of, for example, 16 unique digits. A computer or a portable communication terminal capable of communicating information with the server 3 owned by the customer is used as the customer terminal 25. The system 12 is configured such that the customer inputs the own customer ID on the customer terminal 25 to login the server 3 and then inputs the coming-to-a-store notice date for the next time afterward through the numeric keypad or the touch panel of the customer terminal 25. Note that, the system 12 is also configured such that, during the above-described operation, a calendar for selecting the coming-to-a-store notice date by the customer, information on bargain days, advertising information and the like are outputted on the monitor 21 of the customer terminal 25. These information are programmed to be transmitted from the database 31 of the sever 3.

To the apparatus-in-store 2, are connected an identifier input device 23 functioning as a customer identifier input means, such as reading device that reads a customer ID from a magnetic card and a numeric keypad, and a communication device 24 such as a modem for transmitting information between itself and the server 3. These devices are integrated in the apparatus-in-store 2, and the numeric keypad, the reader/writer device and the input device of the touch panel type are configured such that they can work as an input means as well in the respective devices, though each of those devices may also be configured in a separate device. Similarly to the system 1, the apparatus-in-store 2 may be mounted with a coming-to-a-store notice information input means 22, and the coming-to-a-store notice information may be inputted on either the customer terminal 25 or the coming-to-a-store notice information input means 22. Note that the apparatus-in-store 2 can be mounted with a POS (not shown) or a register so that input of various information at the time of purchasing goods or services is enabled. Further, a printing device for printing the coming-to-a-store notice date on the surface of a card 51 may be included in the apparatus-in-store 2.

In this system 12, the identifier input device 23 of the apparatus-in-store 2 is adapted to read the customer ID from the magnetic card 51 ∼ 53 owned by the customer. A customer came to a store and inserts the card 51 ∼ 53 into the identifier input device 23 to notify the coming to a store of own. Upon such action has been taken, said identifier input device 23 is adapted to read the customer ID and the communication device 24 is adapted to transmit said customer ID to the server 3.

The server 3 is an arithmetic unit to which a database 31, a CPU 4, a RAM 42, etc. are mounted or connected and is maintained in a condition capable of transmitting information between itself and either the customer terminal 25 or the apparatus-in-store 2. In the database 31, at least a date table and a point table for the customer are stored. The CPU 4 is adapted to stand a flag corresponding to the customer ID on a point of the date table which comes under the date specified in the coming-to-a-store notice, when the coming-to-a-store notice information and the customer ID are transmitted from the customer terminal 25. The CPU 41 includes a means for extracting the date of the coming-to-a-store notice information corresponding to the customer ID by utilizing the customer ID as the clue and based on the flag stood on the date table, when the customer ID was transmitted from the apparatus-in-store 2. The CPU 41 also includes a collation means for collating by mathematical operation whether the extracted date of the coming-to-a-store notice information and the date of the actual coming to a store was confirmed (the date the customer ID was transmitted) are consistent with each other not. This collation means is connected with a calendar device to be used for the validation of the date on which the customer ID was transmitted from the apparatus-in-store 2 or a clocking device. Note that the calendar device or the clocking device may be provided to the apparatus-in-store 2 but not to the server 3. In this case, said validated date is transmitted to the server 3 together with the customer ID.

Further, in the system 12, the point presentation means is configured in such a manner that incentive points to be utilized for purchasing goods or services are added, and the CPU 4 includes a point addition means for adding a prefixed number of incentive points to the point table corresponding to the customer ID on condition that such a result that the date of the coming-to-a-store notice information and the date on which the customer ID was transmitted (e.g. today) are consistent was verified by the collation means. Further, the system 12 includes, in addition to or substituting the point addition means, a point additional rate variation means for varying the point additional rate to be multiplied to the incentive points stored in the point table corresponding to the customer ID to the greater rate on condition that such a result that the date of the coming-to-a-store notice information and the date confirmed by the coming-to-a-sore confirmation means are consistent was verified by the collation means. This point additional rate variation means may vary said rate every occasion where verification of fact of coming to a store a prescribed times was made or on specials days such as bargain days and monthly bargain.

Further, in the system 12 to which a penalty imposing means can be applied, the penalty imposing means is configured such that it reduces incentive points usable for purchasing goods or services. The CPU 41 includes a point reduction means for reducing prefixed number of incentive points from the point table corresponding to the customer ID on such condition that it is verified by the collation means that the date of the coming-to-a-store notice information and the date on which the customer ID was transmitted (e.g. today) are inconsistent, and that said transmitted date has passed the date of the coming-to-a-store notice information. Further, in addition to or substituting the point reduction means, the system 12 included a point additional rate variation means for varying the point additional rate to be multiplied to incentive points of the point table corresponding to the customer ID to the lower rate on condition that it is verified by the collation means that the date of coming-to-a-store notice information and the date on which the customer ID was transmitted (e.g. today) are inconsistent with each other, and that the date confirmed by the coming-to-a-store confirmation means has passed the date of the coming-to-a-store notice information. Note that the set-up of the penalty imposing means to be operated or not to be operated may be selected arbitrarily.

Note that, in the other system wherein discount is given to the prices of goods or services to be purchased by a customer by the point presentation means, the CPU 4 is configured such that the prices in the price table corresponding to the customer ID are transmitted to the apparatus-in-store 2, the POS (not shown) and the register on condition that such a result that the date of coming-to-a-store notice information and the date on which the customer ID was transmitted are inconsistent was verified by the collation means. Besides, in the system wherein the point presentation means displays the incentive goods for the customers on the monitor adapted to be observed by the store clerks, the CPU 4 is configured such that it transmits the variety of the relevant incentive goods from the database to the apparatus-in-store 2, the POS (not shown) and the register to display them on condition that such a result that the date of coming-to-a-store notice information and the date on which the customer ID was transmitted are consistent with each other was verified by the collation means. In this manner, the incentive goods, such as a gifts or the like shall be presented to the customer.

Note that, though the card 51 ∼ 53 being used for the system 12 is a card from which magnetic data is read, it is also feasible to prepare the customer ID with identification numbers, a bar code, a two-dimensional bar code or electronic data to thereby write or load the customer ID onto the card, and the customer terminal 25 and the identifier input device 23 can be an input device which corresponds to such cards.

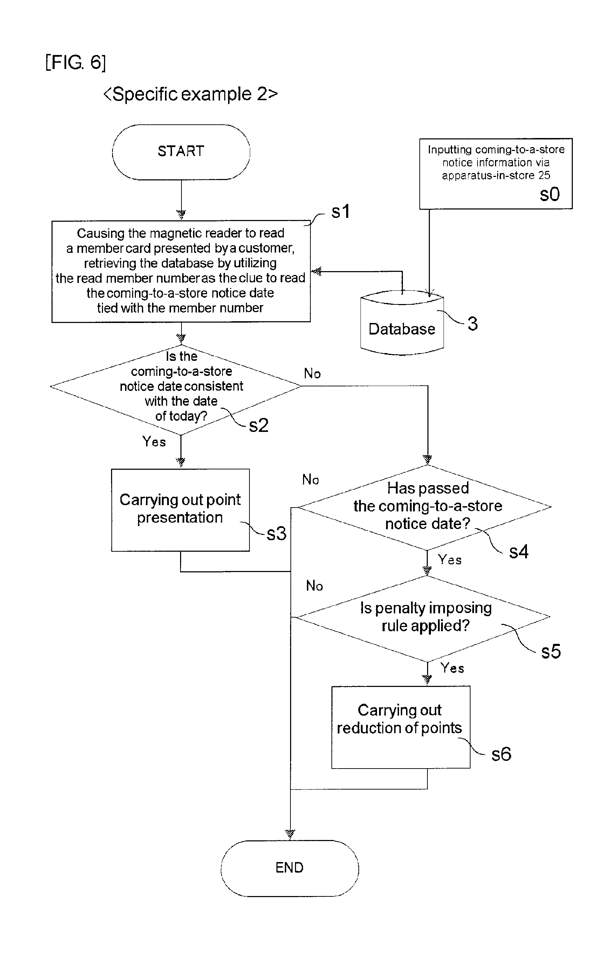

FIG. 6 is a flow chart showing the operational processes in the system 12. When the customer inputted the customer ID to login the server 3 via the customer terminal 25 to be operated by the customer and the date of coming-to-a-store notice (e.g. July 1, 2010) has been inputted, the inputted information is transmitted to the server 3 via the communication line. Accordingly, the CPU 41 stands a flag corresponding to the customer ID on the date table of the database 31 (S0). Up to this process, it is noted as the coming-to-a-store notice stage.

Then, a customer came to a store and inserted the card 51 ∼ 53 into the identifier input device 23, the identifier input device 23 starts to read the customer ID. The customer ID is then transmitted to the server 3, where the CPU 41 utilizes the customer ID as the clue to extract the coming-to-a-store notice date (July 1, 2010) of the customer from the date table of the database 31 (S1).

Next, in the server 3, the CPU 41 checks the date on which the customer ID was transmitted to the server 3 (e.g. today) and verifies by carrying out mathematical operation whether the coming-to-a-store notice date of the customer (e.g. July 1, 2010) is consistent with the date on which the customer ID was transmitted to the server 3 (e.g. today) or not by means of the collation means (S2). Up to this process, it is noted as the collation stage.

In case that the result of the mathematical operation carried out by the collation means is consistent (today is July 1, 2010: Yes), the CPU 41 utilizes the customer ID as the clue to add a prefixed number of points (e.g. 1 point) to the customer's point table stored in the database 31 by means of the point addition means (S3). Up to this process, it is noted as the incentive presentation stage.

In case that the result of the mathematical operation by means of the collation means is inconsistent (No), the CPU 41 verifies whether the date on which the customer ID was transmitted to the server 3 (e.g. today) has passed the coming-to-a-store notice date of the customer (e.g. July 1, 2020) or not (S4). If the transmitted date has not passed the notice date (No), the operation shall be terminated.

In case that the transmitted date has passed the notice date (Yes), the CPU 41 checks whether the penalty imposing means is set to be operated or not (S5). In case that the penalty imposing means is not set to be operated, that is there is no rule of imposing penalty (No), the operation shall be terminated.

In case that the rule of imposing penalty is applied (Yes), the CPU 41 utilizes the customer ID as the clue to actuate the point reduction means to reduce a prefixed number of points (e.g. 1 point) from the customer's point table stored in the database 31 (S6). Up to this process, it is noted as the penalty imposing state. The above-described processes constitutes the flow of the system 12, in which the coincidence between coming-to-a-store notice and the actual coming to a store is checked and verified, and either an incentive is presented or a penalty is imposed in accordance with the collated result.

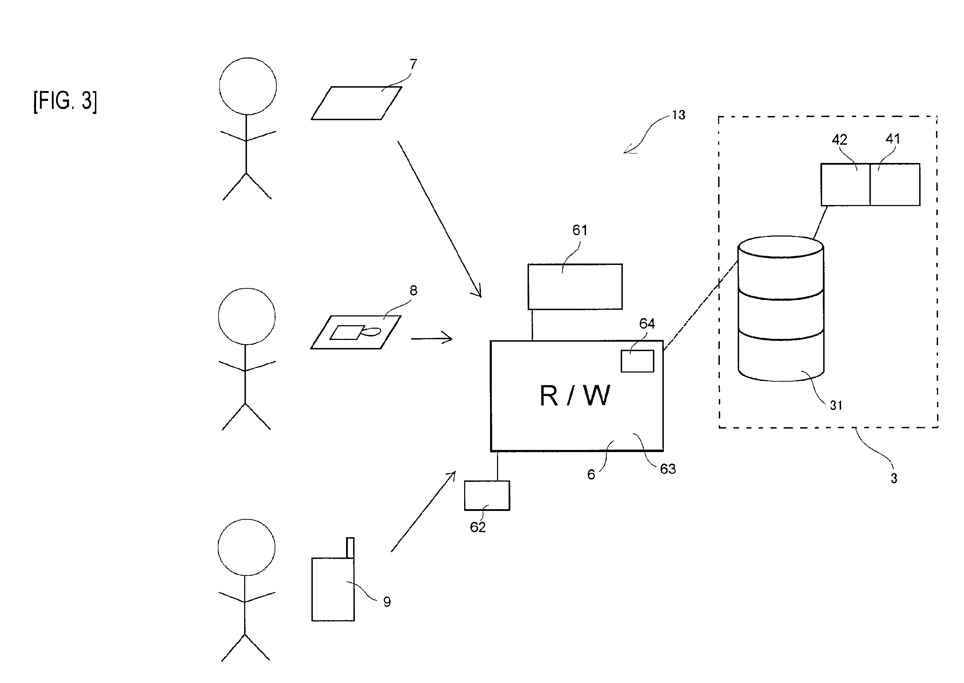

FIG. 3 shows the customer's coming-to-a-store acceleration system according to the third embodiment of the present invention. The customer's coming-to-a-store acceleration system 13 shown in FIG. 3 comprises an apparatus-in-store 6 to be installed in a store and either card 8 with a built-in RFID tag functioning as a non-contact type of storage device or a portable communication terminal 9. This system 13 is an example of the system which carries out the operations between the apparatus-in-store 6 and the storage devices 8, 9, in which, upon a customer's input of coming-to-a-store notice information on the apparatus-in-store 6 installed in the store, said apparatus-in-store 6 stores said information in the storage device 8, 9 owned by the customer, then recognizes the storage devices 8, 9 and reads the information stored therein on the day that the customer actually came to the store to thereby verify the fact of coming to the store, and collates the coming-to-a-store notice information and the actual date of coming to the store to thereby execute presentation of incentive, etc.

The card with a built-in RFID tag owned by the customer is a storage device and an active type of card with a passive or non-contact type of built-in RFID tag having a memory and an antenna, from/to which data can be read and written by an electromagnetic or radio wave reader/writer device. The portable communication terminal 9 is a communication terminal such as a portable telephone provided with a memory function and is a storage device from/to which data can be read and written by an electromagnetic or radio wave reader/writer device. Note that, for example, a contact type of magnetic card 7, which can read and write data by means of a magnetic reader/writer device, can be used as the storage device instead of the non-contact type of storage device described above. In this case, a reader/writer device adapted to write and read magnetic data shall be used.

The apparatus-in-store 6 includes a contact type of reader/writer device 63 and is an apparatus for performing data communication, which is capable of communicating in a system selected from magnetic induction system and radio wave system depending on the storage system 8, 9 owned by the customer and is provided with a communication line and an antenna. The reader/writer device 63 is adapted to write the coming-to-a-store notice information to the storage device 8, 9 and to read the coming-to-a-store notice information stored in the storage device 8, 9. The apparatus-in-store 6 is provided with a collation means for collating the coming-to-a-store notice date and the date on which actual coming to a store was verified (the day on which the coming-to-a-store notice information was read) and a CPU 64 functioning as an incentive presentation means or a penalty imposing means. Further, to the apparatus-in-store 6, are connected a monitor 61 for outputting bargain days, advertisement information and the like as well as a coming-to-a-store notice information input device 62, such as a numeric keypad or a touch panel type of input device as a coming-to-a-store noticing means, and a calendar to be used for selection of the coming-to-a-store notice date by the customer. Note that, similarly to the system 1 and the system 12, the apparatus-in-store 6 may be configured to be connected to the server equipped with a database 31, a CPU 41 and a RAM 42 in the manner capable of communicating information to thereby store the same data as stored in the respective storage devices in the database 31 for the management.

The reader/writer device 63 of the apparatus-in-store 6 recognizes the storage device 8 or 9, when the storage devices 8, 9 are set at the predetermined positions for reading. Then, when a coming-to-a-store notice date is inputted through the coming-to-a-store notice information input device 62 under the state that the reader/writer devices 8, 9 have been set, the reader/writer device 63 performs data communication with the storage devices 8, 9 to store the coming-to-a-store notice information in the memories of the storage devices 8, 9. Besides, when the storage devices 8, 9 are set to the predetermined positions for reading, the apparatus-in-store 6 performs data communication with the storage devices 8, 9 to read the coming-to-a-store notice information having been stored. The CPU 64 includes a collation means which performs mathematical operation to verify, when the coming-to-a-store notice information was read, whether the date of the read coming-to-a-store notice information and the date on which the actual coming to a store was verified (e.g. today) are consistent with each other or not. This collation means is connected with either a calendar device or a clocking device in the apparatus-in-store 6, which performs confirmation of the date on which the coming-to-a-store notice information was read.

Further, in the system 13 wherein a point presentation means for adding incentive points which can be used for purchasing goods or services is applied, the CPU 64 includes a point addition means for adding a prefixed number of points to the point table to be secured or having been secured in the storage devices 8, 9 on condition that such a result that the date on which the fact of the coming-to-a-store was verified by reading of the date of the coming-to-a-store notice information (e.g. today) is consistent was obtained by the collation means. In addition or substituting the point addition means, the CPU 64 further includes a point additional rate variation means for varying the point additional rate to be multiplied to the incentive points in the point table secured in the storage devices 8, 9 to the greater rate on condition that such a result that the date of the coming-to-a-store notice information is consistent with the date on which the coming-to-a-store was verified was observed by the collation means. This point additional rate variation means can be configured such that the rate may be changed for every point tables where the times of the customer's coming to a store has exceeded the prefixed times, or for a given period, e.g. on the days either greater or less numbers of coming-to-a-store notices have been inputted, or on preset bargain days.

In the system 13 wherein the penalty imposing means is applicable, the penalty imposing means is configured such that it reduces the incentive points usable for purchasing goods or services. The CPU 64 includes a point reduction means for reducing a preset number of incentive points from the point table stored in the storage device 8, 9 on condition that such a result that the date of the coming-to-a-store notice information is inconsistent with the date on which the fact of coming-to-a-store was confirmed (e.g. today) is verified by the collation means. Further, in addition to or substituting the point reduction means, the CPU 64 also includes a point additional rate variation means for varying the point additional rate to be multiplied to the incentive points in the point table stored in the storage devices 8, 9 to the lower rate on condition that it is so verified by the collation means that the date of the coming-to-a-store notice information and the date verified by the coming-to-a-store fact verification means are inconsistent and that said verified date by the coming-to-a-store fact verification means has passed the coming-to-a-store notice date. Note that said setup of the penalty imposing means can be cancelled.

In the system wherein the point presentation means for presenting incentive points which can be used to receive discount to the prices of goods or services to be purchased by a customer is applied, the CPU 4 is adapted to transmit the prices of the price table corresponding to the customer to the apparatus-in-store 2, the POS (not shown) and the register on condition that such a result that the date of the coming-to-a-store notice information is consistent with the date on which the customer ID was transmitted (e.g. today) is verified by the collation means. Besides, in the other system wherein incentive goods for customers are displayed by the point presentation means on the monitor to be observed by the store clerks, the CPU 4 is adapted to transmit the variety of the relevant incentive goods from the database to the apparatus-in-store 2, the POS (not shown) and the register and display them on condition that such a result that the date of the coming-to-a-store notice information is consistent with the date on which the customer ID was transmitted (e.g. today) is verified by the collation means. As a result of such proceedings, the incentive good, e.g. a gift or the like, is presented to the customer.

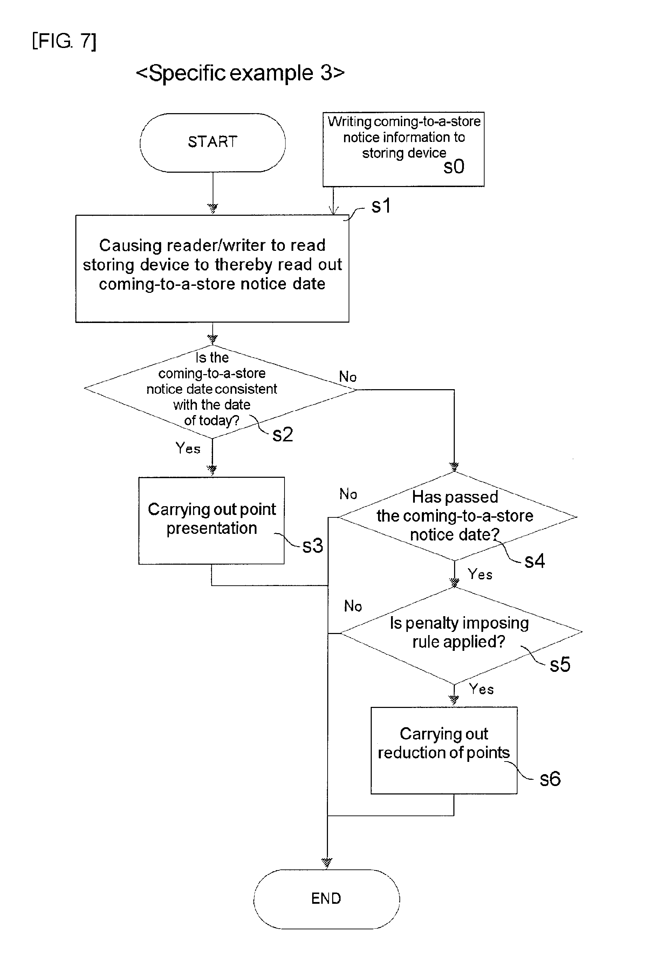

FIG. 7 is a flow chart showing the operational processes constituting the system 13. Upon the customer's coming to a store and setup of the storage device 8 to the predetermined position of the apparatus-in-store 6, the apparatus-in-store 6 recognizes the customer by means of a identification means. When the coming-to-a-store notice dates for the next time afterward (e.g. July 1, 2010) are inputted via the coming-to-a-store notice information input device 22, the inputted information is stored in a memory of the storage device 8 by the reader/writer device 63 of the apparatus-in-store 6 (S0). Up to this process, it is noted as coming-to-a-store notice stage.

Then, the customer came again to the store and set the storage device 8 to the predetermined position of the apparatus-in-store 6, the reader/writer device 63 of the apparatus-in-store 6 reads the stored information of the coming-to-a-store notice date (e.g. July 1, 2010)(S1).

Then, the CPU 64 in the apparatus-in-store 6 verifies by carrying out a mathematical operation whether the date of the customer's coming to the store (e.g. July 1, 2010) and the date on which the customer ID was read (e.g. today) are consistent with each other or not (S2).

In case that the result of the mathematical operation by the collation means was consistent (today is July 1, 2010: Yes), the CPU 64 causes the point addition means to calculate the points to be added and the reader/writer device 63 to write information for adding a prefixed points (e.g. 1 point) to the point table in the memory to be secured or secured in the storage device 8 (S3).

Whereas, in case that the result of the mathematical operation by the collation means is inconsistent (No), the CPU 64 verifies whether the date on which the coming-to-a-store notice was read (e.g. today) has passed the date of the customer's coming-to-a-store notice (e.g. July 1, 2010) or not (S4). In case that the read date has not passed the date of the coming-to-a-store notice (No), the operation shall be terminated.

In case that the read date has passed the date of the coming-to-a-store notice (Yes), it is verified whether the penalty imposing means is applied or not (S5). In case that the penalty imposing means is not applied and there is no rule of imposing penalty (No), the operation shall be terminated.

In case that the rule of imposing penalty is applied (Yes), the CPU 64 causes the point reduction means to calculate the points to be reduced and the reader/writer device 63 to reduce a preset number of points (e.g. 1 point) from the point table secured in the memory in the storage device 8 (S6). Note that the flow of the system in which the actual coming to a store is verified based on the coming-to-a-store notice, and a either predetermined incentive or penalty is applied accordingly, is as described above.

Although each of the systems 1, 12 and 13 is described as a separate system, these systems can be combined to constitute another system. For example, a complex system consisting of the system 12 structured by combining the system 1 with the coming-to-a-store notice information input means and the system 13 combined with the apparatus-in-store 6 which reads and writes information from/to storage devices 7, 8 and 9 may be provided.

Although the date of the coming-to-a-store and the verified date of the actual coming-to-a-store are expressed with the unit of day in the above, the other units, such as week, month and year, may be used arbitrarily. For the verification of the fact of the customer's coming to a store, although an example in which the customer came to a store and operated inputs of the customer identifier and reading from the storage device to verify the fact of coming to a store is given, the fact of coming to a store can be verified with the date on which the customer came to the store and purchased goods or services. Alternatively, the verification of the fact of coming to a store can be effected not only with the date actually come to a store but also with the date on which the customer visited a virtual store on the Internet from the customer terminal 25 instead of the apparatus-in-store 2 and purchased goods or services. In this case, the verification of the fact of coming to a store will be made with the login to the server 3 or purchasing performance.

The systems according to the present invention as described above can be used at various kinds of stores and shops. For example, in case that the system is used at a retailer such as a supermarket and a department store, it is feasible to buy in more goods and to set bargain days on days of having had more notices of customer's coming to a store. Further, in case that the systems of the present invention are used in an amusement facilities and the like, it is feasible to set special sales days to issue more winning tickets on days of having had more notices of customer's coming to a facilities.

### ADVANTAGEOUS EFFECT OF THE INVENTION

The customer's coming-to-a-store acceleration system according to the present invention comprises:
a coming-to-a-store notice means for inputting coming-to-a-store notice information including at least either one of an expected date or time of customer's coming to a store or purchasing for the next time afterward and duration until the customer's coming to a store or purchasing is made,
a means for specifying the customer's coming-to-a-store notice information,
a collation means for collating coincidence and discrepancy between either the date or time of customer's coming to a store or duration until the customer's coming to a store or purchasing is made and the date, time or duration on/at/during which the customer's coming to a store or purchasing is verified, and
an incentive presentation means for presenting an incentive to the customer on condition that it is verified by the collation means that either the date or time of the coming-to-a-store notice information or the duration until the customer's coming to a store or purchasing is made is consistent with either the date on which the customer's coming to a store or purchasing is verified or duration until the customer's coming to a store or purchasing is made. With this system, more incentive is presented to the customer if the customer came to a store on the same day as the date specified in the customer's coming-to-a-store notice information. Therefore, the customer can get more incentives by coming to the store or purchasing goods or services on the day noticed by the customer itself, which may strongly motivates the customer to come to the store. On the other hand, the store can encourage the customer's coming to the store to thereby increase the number of customers and obtain estimated information on the customer's coming to a store for the next time afterward, which is useful for setup of bargain days and the inventory management.

## Claims

1. A customer's coming-to-a-store acceleration system comprising:
a coming-to-a-store notice means for inputting coming-to-a-store notice information including at least either one of an expected date or time of customer's coming to a store or purchasing for the next time afterward and duration until the customer's coming to a store or purchasing is made,
a means for specifying the customer's coming-to-a-store notice information,
a collation means for collating coincidence and discrepancy between either the date or time of the customer's coming to a store or duration until the customer's coming to a store or purchasing is made and either the date or the time on/at which the customer's coming to a store or purchasing is verified or duration until said coming to a store or said purchasing was verified, and
an incentive presentation means for presenting an incentive to the customer on condition that it is verified by the collation means that either the date or time of the coming-to-a-store notice information or duration until the customer's coming to a store or purchasing is made is consistent with either the date or time on/at which the customer's coming to a store or purchasing was verified or duration until the customer's coming to a store or purchasing was verified,
**characterized in that** an incentive is presented to the customer on condition that the customer came to a store on the same day as the date specified in the customer's coming-to-a-sore notice information.

2. A customer's coming-to-a-store acceleration system according to claim 1 **characterized in that** the system comprising:
a coming-to-a-store notice means for inputting coming-to-a-store notice information including at least either one of the date or time of customer's coming to a store or duration until the coming-to-a-store or purchasing for the next time afterward is made,
a customer identifier input means for inputting the customer identifier,
a transmission means for transmitting the inputted information between itself and the database,
a storage means for storing the coming-to-a-store notice information in correlation with the customer identifier,
an extraction means for extracting the coming-to-a-store notice information corresponding to the customer identifier,
a collation means for collating whether either the extracted date or time of the coming-to-a-store notice information or the duration until the coming to a store or purchasing was made is consistent with either the date or time on/at which the customer identifier was inputted by the customer identifier input means or the duration until said inputting was made or not, and
an incentive presentation means for presenting an incentive to the customer on condition that it is verified by the collation means that either the date or time of the coming-to-a-store notice information or duration until the coming-to-a-store or purchasing was made is consistent with the date or time on/at which the customer identifier was inputted via the customer identifier input means or duration until said input was made,
and that an incentive is presented to the customer on condition that the customer came to a store on the same day as the date specified in the customer's coming-to-a-sore notice information.

3. A customer's coming-to-a-store acceleration system according to claim 1 **characterized in that** the system comprising:
a coming-to-a-store notice means for inputting coming-to-a-store notice information including at least either one of the date or time of the customer's coming to a store or purchasing for the next time afterward and duration until the coming to a store or purchasing is made,
a storage device recognition means for recognizing the customer's storage device,
a storage means for storing the coming-to-a-store notice information in the storage device,
a reading means for reading the coming-to-a-store notice information stored in the storage device,
a collation means for collating coincidence or discrepancy between either the date or time of the coming-to-a-store notice information read by the reading means or duration until coming-to-a-store or purchasing and either the date or time on/at which the coming-to-a-store notice information was read by the reading means or the duration until said reading was made, and
an incentive presentation means for presenting an incentive to the customer on condition that it is verified by the collation means that either the date or time of the coming-to-a-store notice information or duration until the coming-to-a-store or purchasing was made is consistent with either the date or time on/at which the coming-to-a-store notice information was read or duration until said reading was made,
and that an incentive is presented to the customer on condition that the customer came to a store on the same day as the date specified in the customer's coming-to-a-sore notice information.

4. A customer's coming-to-a-store acceleration system according to any one of the preceding claims **characterized in that** the penalty imposing means for imposing penalty is applied to the system on such condition that the result of said verification performed by the collation means is inconsistent and/or that the date, time or duration on/at/during which the verified result by the collation means was operated has passed either the date or time of the coming-to-a-store notice information or duration until the coming-to-a-store or the purchasing was made.

5. A customer's coming-to-a-store acceleration system according to any one of the preceding claims **characterized in that** the incentive presentation means includes a point addition means for adding incentive points to the customer's point table on condition that the verified result by the collation means is consistent.

6. A customer's coming-to-a-store acceleration system according to claim 5 **characterized in that** incentive presentation means includes a point additional rate variation means for varying the additional rate to be multiplied to the incentive points.

7. A customer's coming-to-a-store acceleration system according to any one of the preceding claims **characterized in that** the penalty imposing means includes a point reduction means for reducing incentive points from the customer's point table on such conditions that said verified result by the collation means is inconsistent and/or that the date, time or duration on/at/during which said verified result by the collation means was operated has passed either the date or time of the coming-to-a-store notice information or duration until coming-to-a-store or purchasing was made.

8. A customer's coming-to-a-store acceleration system according to claim 7 **characterized in that** the penalty imposing means includes a point reduction rate variation means for varying the reduction rate to the incentive points.

9. A customer's coming-to-a-store acceleration system according to any one of the preceding claims **characterized in that** the incentive presentation means includes a means for giving discount to the goods or services those which will be purchased by the customer on condition that the verified result by the collation means is consistent.

10. A customer's coming-to-a-store acceleration system according to any one of the preceding claims **characterized in that** the incentive presentation means includes a means for displaying the details of the incentives to be presented to the customer on the device installed in the store on condition that the collated result by the collation means is consistent.

11. A customer's coming-to-a-store acceleration system according to any one of the preceding claims **characterized in that** the coming-to-a-store notice means is an input device for selecting the date or time of coming-to-a-store for the next time afterward or duration until the next coming-to-a-store is made from the displayed calendar to input the selected date, time or duration.

12. A customer's coming-to-a-store acceleration system according to any one of the preceding claims **characterized in that** the collation means is a mathematical operation means for collating coincidence or discrepancy between either the date or time of the coming-to-a-store notice information or duration until the coming-to-a-store or purchasing is made and the date, time or duration on/at/during which the collation means carries out mathematical operation based on the measured result obtained by the clocking device.

13. A customer's coming-to-a-store acceleration system according to any one of claims 2 and 4 through 12, **characterized in that** the customer identifier input means is either an input device for inputting an identification number, a bar codes, a two-dimensional bar codes, magnetic data and electronic data or a reading device for reading an identification number, a bar codes, a two-dimensional bar code, magnetic data and electronic data.

14. A customer's coming-to-a-store acceleration system according to any one of claims 3 through 13 **characterized in that** the storage device is a writing device for writing data to a magnetic card, an IC tag or a terminal owned by a customer.
